# FASCICULE DE BREVET EUROPEEN

(11) **EP 3 935 265 B1**
(45) Date de publication et mention de la délivrance du brevet: **29.11.2023**
(21) Numéro de dépôt: 20706764.6
(22) Date de dépôt: 04.03.2020
(51) Int. Cl.: F01D 5/22, F01D 5/26, F01D 5/30

(54) **ROTOR DE TURBOMACHINE D'AÉRONEF COMPRENANT UN DISPOSITIF D'AMORTISSEMENT**
ROTOR EINER FLUGZEUGTURBOMASCHINE MIT DÄMPFUNGSVORRICHTUNG
AIRCRAFT TURBOMACHINE ROTOR COMPRISING A DAMPING DEVICE

(30) Priorité: 06.03.2019 FR 1902260
(43) Date de publication de la demande: 12.01.2022
(73) Titulaire: SAFRAN AIRCRAFT ENGINES, 75015 Paris (FR)
(72) Inventeur: CORNEC, Nicolas, Gérard, Bénito, 77550 MOISSY-CRAMAYEL (FR)
(74) Mandataire: Argyma
(86) Numéro de dépôt international: PCT/EP2020/055599
(87) Numéro de publication internationale: WO 2020/178300

(56) Documents cités:
- WO-A1-2012/020195
- CA-A- 604 830
- GB-A- 2 062 119
- US-A- 4 781 534

## Description

### DOMAINE TECHNIQUE ET OBJET DE L'INVENTION

La présente invention concerne le domaine des turbomachines utilisées pour la propulsion d'un aéronef. L'invention concerne plus particulièrement un rotor de turbomachine d'aéronef comprenant un dispositif d'amortissement des aubes de rotor.

### ETAT DE LA TECHNIQUE

De manière connue, une turbomachine d'aéronef s'étend longitudinalement selon un axe X et permet de déplacer l'aéronef à partir d'un flux d'air entrant dans la turbomachine et circulant d'amont en aval. Par la suite, les termes « amont » et « aval » sont définis par rapport à l'axe longitudinal X orienté d'amont en aval. De même, les termes « intérieur » et « extérieur » sont définis selon la direction radiale par rapport à l'axe longitudinal X. De manière connue, la turbomachine comprend un compresseur, une chambre de combustion et une turbine pour entraîner en rotation le compresseur. Le compresseur comprend un ou plusieurs rotors, montés en ligne suivant un axe longitudinal X pour comprimer le flux d'air circulant de l'amont vers l'aval dans une veine primaire de la turbomachine.

En pratique, un rotor comprend un disque de rotor, s'étendant transversalement par rapport à l'axe longitudinal X, qui est solidaire d'un arbre de transmission de puissance. Le disque de rotor comprend une pluralité de logements, également nommés alvéoles, formés à la périphérie extérieure du disque de rotor, dans lequel sont respectivement montées des aubes par insertion axiale selon l'axe longitudinal X. Les aubes s'étendent dans un même plan transversal à l'axe longitudinal X. Chaque aube s'étend radialement par rapport à l'axe longitudinal X et comprend successivement un pied de montage, radialement intérieur, configuré pour être monté dans un desdits logements du disque de rotor, une plateforme, permettant de maintenir à distance une aube prédéterminée par rapport aux aubes adjacentes et de reconstituer la surface interne de la veine d'air, et une pale radiale de déviation d'air, radialement extérieure.

Lors du fonctionnement de la turbomachine, chaque aube est soumise principalement à trois types de sollicitations, à savoir les efforts centrifuges, les perturbations aérodynamiques et les perturbations à l'équilibre du disque de rotor. Sous l'effet des efforts centrifuges, chaque pied de montage se plaque contre la partie extérieure du logement dans lequel il est monté et exerce une pression dépendante de la vitesse de rotation du rotor. Lors d'un changement de régime de la turbomachine, les efforts centrifuges varient, ce qui entraîne des variations de pression au niveau des logements, à l'origine de mouvements relatifs radiaux par rapport à l'axe longitudinal X entre chaque pied de montage et le logement dans lequel il est monté. Les perturbations aérodynamiques créent quant à elles des variations de contraintes du flux d'air sur les pales, induisant également des mouvements relatifs entre chaque pied d'aube et le logement dans lequel il est monté. Enfin, lorsque la masse du disque du rotor n'est pas équilibrée, c'est-à-dire en présence de balourds, il existe également un mouvement relatif entre chaque pied d'aube et le logement dans lequel il est monté.

La répétition de mouvements relatifs conduit à des phénomènes d'usure des pieds de montage des aubes et des logements du disque de rotor, ce qui réduit leur durée de vie. Pour limiter ces phénomènes d'usure, il est connu d'introduire une pièce supplémentaire entre un pied d'aube et son logement.

Il a été proposé par la demande de brevet FR2918702A1 d'envelopper le pied de montage d'une aube avec un clinquant comportant un matériau viscoélastique afin d'absorber les mouvements relatifs. Néanmoins, lors de son utilisation, chaque clinquant est susceptible de se déplacer axialement et d'entrer en contact avec un autre disque de rotor positionné en aval au disque de rotor dans lequel est monté le clinquant. Un tel déplacement est susceptible d'augmenter l'usure des pieds de montage des aubes et du disque de rotor aval, ce qui présente un inconvénient.

De manière alternative, il a été proposé par la demande de brevet FR2915510A1 d'utiliser un amortisseur comprenant une semelle, prenant appui sur la périphérie extérieure du disque, une masselotte, contribuant à équilibrer la masse du disque de rotor, et un ressort reliant la semelle et la masselotte de sorte que la masselotte exerce un appui sur les plateformes de deux aubes adjacentes. L'amortisseur permet également de limiter les mouvements relatifs entre les aubes et les logements. Toutefois, de même que pour le clinquant, chaque amortisseur est susceptible de se déplacer axialement et d'entrer en contact avec un disque de rotor positionné en aval. Comme présenté précédemment, un tel déplacement est susceptible d'augmenter l'usure des pieds de montage des aubes et du disque de rotor aval, ce qui présente un inconvénient.

Dans le domaine des rotors de turbine, il est connu par la demande de brevet WO2012/020195A1 de monter des secteurs d'anneau dans la gorge du disque de rotor, qui comprennent des orifices de ventilation, des cales de blocage radial et des dents de blocage axial des pieds d'aubes. De telles cales ne sont toutefois pas adaptées pour amortir le mouvement relatif des pieds d'aubes dans leur logement mais pour les bloquer et sont pour cela montées dans les logements sous chaque pied d'aube.

Également dans le domaine des rotors de turbine, il est connu par la demande de brevet US4781534A ou le document GB2062119-A de plaquer contre l'une ou les deux face(s) radiale(s) du disque de rotor un anneau avec des languettes montées dans les logements sous chaque pied d'aube afin de réduire les fuites d'air dues au désalignement du disque et des aubes, notamment à pied en forme de sapin. De telles languettes présentent les mêmes inconvénients que les cales de blocage précédemment décrites.

Il existe donc un besoin pour un dispositif d'amortissement permettant de réduire les mouvements relatifs entre les aubes de rotor et leurs logements sans engendrer d'usures.

### PRESENTATION GENERALE DE L'INVENTION

L'invention concerne un dispositif d'amortissement pour rotor de turbomachine, ladite turbomachine s'étendant longitudinalement selon un axe X, ledit rotor comprenant un disque de rotor s'étendant transversalement par rapport à l'axe longitudinal X et une pluralité d'aubes, ledit disque de rotor comprenant une pluralité de logements formés à la périphérie extérieure du disque de rotor, chaque aube s'étendant radialement par rapport à l'axe longitudinal X et comprenant un pied de montage, radialement intérieur, configuré pour être monté dans un desdits logements, une plateforme et une pale de déviation d'air radialement extérieure.

L'invention est remarquable en ce que le dispositif d'amortissement comprend :
un anneau de support configuré pour s'étendre transversalement par rapport à l'axe longitudinal X et configuré pour être positionné à la périphérie extérieure du disque de rotor, et
- une pluralité d'organes d'amortissement, solidaires de l'anneau de support et s'étendant en saillie vers l'amont depuis l'anneau de support, chaque organe d'amortissement étant configuré pour s'étendre sous au moins une plateforme d'une aube de manière à exercer un effort radial vers l'extérieur de manière à amortir le déplacement radial de ladite aube lors du fonctionnement de la turbomachine.

Grâce à l'invention, il n'existe avantageusement pas de mouvement relatif entre les organes d'amortissement étant donné qu'ils sont reliés par l'anneau de support, ce qui limite l'usure. De plus, leur position radiale est déterminée de manière précise. En outre, les organes d'amortissement permettent de guider les plateformes des aubes lors de leur montage et de les plaquer radialement vers l'extérieur lors du fonctionnement de la turbomachine. Un tel dispositif d'amortissement possède un encombrement réduit et une masse faible. L'étanchéité du rotor est par ailleurs améliorée.

De manière préférée, le dispositif d'amortissement est constitué d'un anneau de support et d'une pluralité d'organes d'amortissement. Un tel dispositif d'amortissement possède une structure simple, ce qui permet de réduire sa masse, son encombrement ainsi que son coût.

De préférence, chaque organe d'amortissement est monté de manière précontrainte sous au moins une plateforme d'une aube de manière à exercer un effort radial vers l'extérieur de manière à amortir le déplacement radial de ladite aube lors du fonctionnement de la turbomachine. Autrement dit, les organes d'amortissement sont montés au contact des plateformes d'aubes et sous l'effet des forces centrifuges, les organes d'amortissement exercent un effort radial important sur les plateformes d'aubes vers l'extérieur pour amortir efficacement le déplacement des aubes. Le plaquage des aubes lors du fonctionnement de la turbomachine est amélioré par le montage par précontrainte des organes d'amortissement contre les plateformes d'aubes.

Préférentiellement, chaque organe d'amortissement se présente sous la forme d'une lame ressort configurée pour exercer un effort radial vers l'extérieur. Une telle forme permet de réaliser un plaquage surfacique optimal tout en limitant la masse et l'encombrement.

De préférence, les organes d'amortissement sont répartis de manière uniforme à la circonférence de l'anneau de support. Ainsi, l'effort radial des organes d'amortissement est appliqué de manière homogène.

De manière préférée, au moins un organe d'amortissement comprend une portion proximale reliée à l'anneau de support, une portion distale montée libre et une portion centrale formée entre la portion proximale et la portion distale.

Selon un aspect préféré, la portion proximale possède une épaisseur inférieure à l'épaisseur de la portion centrale. La portion proximale forme ainsi avantageusement une portion flexible permettant d'articuler l'organe d'amortissement par rapport à l'anneau de support afin de réaliser un effort de plaquage optimal.

Selon un autre aspect préféré, la portion distale possède une épaisseur supérieure à l'épaisseur de la portion centrale. L'extrémité distale possède ainsi une masse supérieure afin d'exercer un effort de plaquage plus important sous l'effet des forces centrifuges. Cela est avantageux étant donné que l'extrémité distale est située sous une portion médiane de la plateforme et permet ainsi d'agir dans l'axe de son centre de gravité. L'amortissement est ainsi amélioré.

De préférence, au moins un organe d'amortissement comprend une face extérieure plane. Ainsi, la face extérieure permet de réaliser un appui plan garant d'un plaquage uniforme limitant les vibrations. De préférence encore, la face intérieure comprend une excroissance, en particulier, à son extrémité distale. Une telle excroissance permet de renforcer le plaquage en augmentant l'effet centrifuge, ce qui est avantageux étant donné que l'extrémité distale est située sous une portion médiane des plateformes des aubes. En outre, l'excroissance forme une réserve de matière pouvant être aisément usinée afin de corriger un balourd du rotor.

L'invention concerne également un rotor pour turbomachine s'étendant longitudinalement selon un axe X, ledit rotor comprenant un disque de rotor s'étendant transversalement par rapport à l'axe longitudinal X et une pluralité d'aubes, ledit disque de rotor comprenant une pluralité de logements formés à la périphérie extérieure du disque de rotor, chaque aube s'étendant radialement par rapport à l'axe longitudinal X et comprenant un pied de montage, radialement intérieur, configuré pour être monté dans un desdits logements, une plateforme et une pale de déviation d'air radialement extérieure, le rotor comprenant un dispositif d'amortissement, tel que présenté précédemment, dont l'anneau de support est positionné à la périphérie extérieure du disque de rotor et dont les organes d'amortissement s'étendent en saillie vers l'amont depuis l'anneau de support, chaque organe d'amortissement s'étendant sous au moins une plateforme d'une aube de manière à exercer un effort radial vers l'extérieur de manière à amortir le déplacement radial de ladite aube lors du fonctionnement de la turbomachine.

De manière préférée, chaque organe d'amortissement s'étend sous au moins les plateformes de deux aubes. Ainsi, un organe d'amortissement permet d'appliquer un plaquage uniforme entre deux aubes adjacentes.

De préférence, le rotor comprenant un disque de rotor aval, positionné en aval du disque de rotor dans lequel sont montées les aubes, l'anneau de support est positionné contre le disque de rotor aval. Tout mouvement aval du dispositif d'amortissement est ainsi éliminé.

De préférence, chaque organe d'amortissement s'étend en porte à faux vers l'amont. Il n'existe ainsi pas d'usure de la périphérie extérieure du disque de rotor par les organes d'amortissement.

L'invention concerne également une turbomachine s'étendant longitudinalement selon un axe X comprenant un rotor tel que présenté précédemment.

L'invention concerne en outre un procédé d'utilisation d'une turbomachine s'étendant longitudinalement selon un axe X et comprenant un rotor tel que présenté précédemment, le procédé comprenant :
- une étape de mise en fonctionnement de la turbomachine, au cours de laquelle le disque de rotor est mis en rotation à une vitesse de rotation selon l'axe longitudinal X et chaque pied de montage d'une aube est déplacé radialement vers la partie extérieure de son logement par effet centrifuge et
- une étape de plaquage radialement extérieur de chaque aube par au moins un organe d'amortissement de manière à amortir le déplacement radial du pied de montage de ladite aube dans son logement.

L'invention concerne en outre un procédé de fabrication d'un dispositif d'amortissement, tel que présenté précédemment, comprenant :
- une étape de découpage dans un panneau mince des contours plans du dispositif d'amortissement,
- une étape d'emboutissage des organes d'amortissement découpés de sorte à leur conférer leur relief et leur épaisseur, et
- une étape de pliage des organes d'amortissement emboutis de sorte à les orienter dans la direction axiale vers l'amont.

Un dispositif d'amortissement peut ainsi être fabriqué de manière pratique, rapide et bon marché.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation en coupe longitudinale d'une turbomachine selon une forme de réalisation de l'invention,
La figure 2 est une représentation schématique tridimensionnelle d'une portion de rotor de turbomachine équipé du dispositif d'amortissement selon l'invention et de deux aubes,
La figure 3 est une représentation schématique tridimensionnelle d'une portion de rotor de turbomachine équipé du dispositif d'amortissement selon l'invention avec les aubes en transparence,
La figure 4 est une représentation schématique en perspective du dispositif d'amortissement selon l'invention,
La figure 5 est une représentation schématique en coupe transversale d'une portion de rotor de turbomachine équipé du dispositif d'amortissement selon l'invention,
La figure 6 est une représentation schématique en coupe transversale du dispositif d'amortissement selon l'invention et
La figure 7 est une représentation schématique d'un procédé de fabrication d'un dispositif d'amortissement selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE D'UNE FORME DE REALISATION DE L'INVENTION

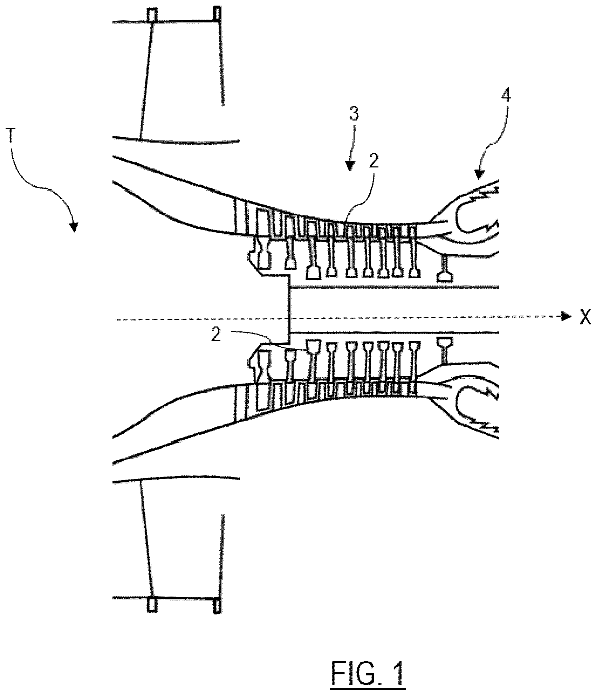

En référence à la figure 1, il est représenté une turbomachine T s'étendant longitudinalement selon un axe X et permettant de déplacer l'aéronef à partir d'un flux d'air entrant dans la turbomachine T et circulant d'amont en aval. Par la suite, les termes « amont » et « aval » sont définis par rapport à l'axe X orienté d'amont en aval. De même, les termes « intérieur » et « extérieur » sont définis selon la direction radiale par rapport à l'axe longitudinal X. De manière connue, la turbomachine T comprend un compresseur 3, une chambre de combustion 4 et une turbine pour entraîner en rotation le compresseur 3. Le compresseur 3 comprend un ou plusieurs rotors 2, montés en ligne suivant l'axe longitudinal X pour comprimer le flux d'air circulant de l'amont vers l'aval dans une veine primaire de la turbomachine T.

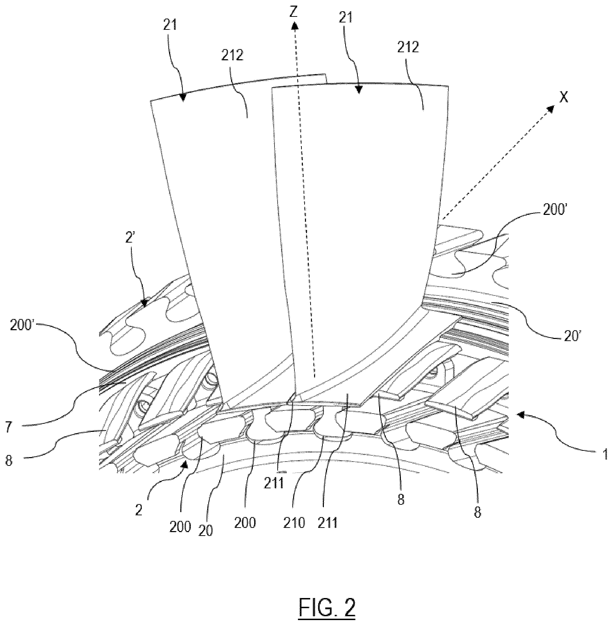

Comme illustré sur la figure 2 représentant une forme de réalisation de l'invention, un rotor 2 comprend un disque de rotor 20 s'étendant transversalement par rapport à l'axe longitudinal X et solidaire d'un arbre de transmission de puissance (non représenté) ainsi qu'une pluralité d'aubes 21. Le disque de rotor 20 comprend une pluralité de logements 200, également nommés alvéoles, formés à la périphérie extérieure du disque de rotor 20, dans lequel sont respectivement montées les aubes 21 par insertion axiale selon l'axe longitudinal X. Les aubes 21 s'étendent dans un même plan transversal à l'axe longitudinal X. Sur la figure 2, les aubes 21 sont identiques entre elles mais il va de soi que les aubes 21 pourraient être différentes. Par la suite, par souci de clarté, on décrit une seule aube 21 en référence à la figure 2.

De manière connue, une aube 21 s'étend radialement selon un axe Z défini par rapport à l'axe longitudinal X et comprend successivement un pied de montage 210, configuré pour être monté axialement dans un desdits logements 200 du disque de rotor 20, une plateforme 211, permettant de maintenir à distance une aube 21 prédéterminée par rapport aux aubes 21 adjacentes et de reconstituer la surface interne de la veine primaire et une pale 212 de déviation d'air s'étendant radialement par rapport à l'axe longitudinal X. L'aube 21 s'étend radialement en position montée. Le pied de montage 210 est ainsi qualifié de radialement intérieur tandis que la pale 212 est qualifiée de radialement extérieure par rapport à l'axe longitudinal X.

Afin de limiter le mouvement relatif des aubes 21 par rapport au disque de rotor 20, le rotor 2 comporte un dispositif d'amortissement 1 positionné entre la périphérie extérieure du disque de rotor 20 et les plateformes 211 des aubes 2 de manière à plaquer les aubes 21 de manière radialement extérieure dans leurs logements 200.

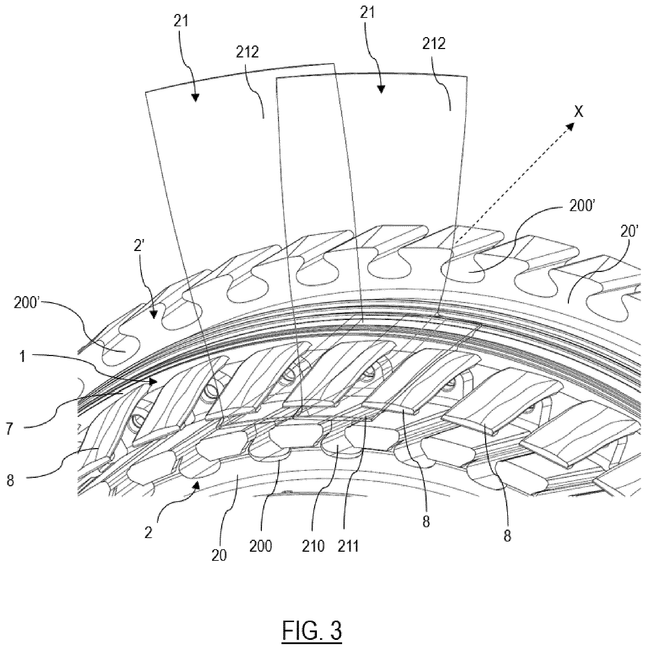

Une forme de réalisation d'un dispositif d'amortissement 1 selon l'invention est présenté en référence aux figures 2 à 6. Comme illustré sur la figure 3, le dispositif d'amortissement 1 comprend un anneau de support 7 et une pluralité d'organes d'amortissement 8 qui sont solidaires de l'anneau de support 7. De manière préférée, le dispositif d'amortissement 1 est réalisé en métal, de préférence en acier inoxydable de manière à posséder une résistance mécanique élevée ainsi qu'une flexibilité pour améliorer l'amortissement. Toutefois, il va de soi que d'autres matériaux pourraient être utilisés.

De manière préférée, le dispositif d'amortissement 1 est monobloc. Autrement dit, les organes d'amortissement 8 sont issus de matière de l'anneau de support 7. Cela permet de réaliser un amortissement optimal par effet ressort tout en réduisant le coût de fabrication.

Selon l'invention et en référence aux figures 2 à 6, l'anneau de support 7 s'étend transversalement par rapport à l'axe longitudinal X. Ainsi, l'axe longitudinal X passe par le centre de l'anneau de support 7. L'anneau de support 7 est configuré pour être positionné à la périphérie extérieure du disque de rotor 20. Les organes d'amortissement 8 peuvent ainsi être directement en contact avec les plateformes 211 des aubes 21. Dans cet exemple, l'anneau de support 7 est positionné en aval des logements 200 afin de pouvoir être positionné sur un disque de rotor 20' situé en aval dudit disque de rotor 20 comme illustré à la figure 2.

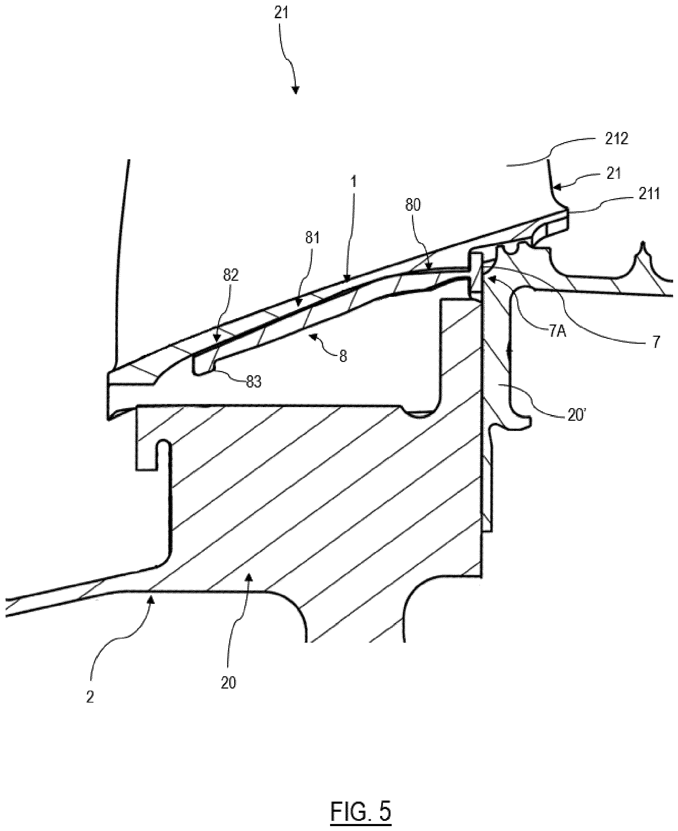

Selon un aspect de l'invention, l'anneau de support 7 possède un diamètre légèrement supérieur au diamètre du disque de rotor 20 de sorte à être positionné sur le disque de rotor 20 à proximité des plateformes 211 des aubes 21 qui sont montées par la suite. Comme illustré sur la figure 5, l'insertion des aubes 21 dans les logements 200 du disque de rotor 20 assure de manière avantageuse le blocage radial et longitudinal de l'anneau de support 7. L'anneau de support 7 est en effet avantageusement bloqué longitudinalement en aval par le disque de rotor aval 20', radialement vers l'extérieur par les plateformes 211 et radialement vers l'intérieur par le disque de rotor 20. Ainsi, tout mouvement relatif entre le dispositif d'amortissement 1 et le disque de rotor aval 20' est supprimé, ce qui élimine le risque d'usure.

L'anneau de support 7 est de préférence plat et possède une épaisseur faible afin de pouvoir être positionné de manière pratique sur le disque de rotor aval 20', sans augmenter l'encombrement. De manière préférée, l'anneau de support 7 comporte une surface plane aval 7A destinée à être positionnée contre une surface amont, de préférence sensiblement radiale, du disque de rotor aval 20'.

Selon l'invention et en référence aux figures 2 à 6, les organes d'amortissement 8 s'étendent en saillie vers l'amont depuis l'anneau de support 7. Plus précisément, chaque organe d'amortissement 8 est configuré pour s'étendre sous les plateformes 211 de deux aubes 21 adjacentes de manière à exercer un effort radial dirigé vers l'extérieur de manière à amortir les mouvements relatifs radiaux des pieds de montage 210 desdites aubes 21 adjacentes dans leur logement 200. De manière préférée, chaque organe d'amortissement 8 se présente sous la forme d'une lame ressort configurée pour exercer un effort radial vers l'extérieur. Comme illustré aux figures 2 et 3, chaque organe d'amortissement 8 s'étend en porte-à-faux vers l'amont.

Les organes d'amortissement 8 sont répartis de manière uniforme à la périphérie de l'anneau de support 7 de manière à permettre l'amortissement de l'ensemble des aubes 20. De manière préférée, il y a autant d'organes d'amortissement 8 que d'aubes 21 afin de permettre un amortissement uniforme.

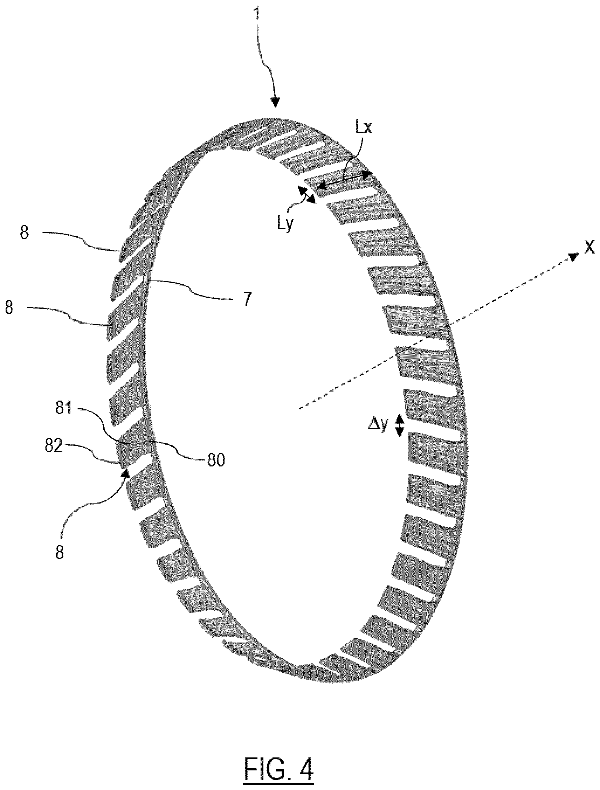

De manière préférée, en référence à la figure 4, deux organes d'amortissement adjacents 8 sont écartés tangentiellement par rapport à l'axe X d'une distance angulaire Δy qui correspond approximativement à la largeur d'un pied de montage 210 d'une aube. Autrement dit, chaque organe d'amortissement 8 est configuré pour être situé dans une cavité formée entre deux pieds de montage 210 d'aubes adjacentes 21.

Toujours en référence à la figure 4, chaque organe d'amortissement 8 possède une longueur Lx comprise entre 50mm et 60mm, une largeur Ly comprise entre 20mm et 25mm et une épaisseur radiale comprise entre 0,5mm et 1mm. La longueur Lx est déterminée pour permettre un support optimal des plateformes 211 des aubes 21, en particulier, sur plus de 50% de leur longueur. La longueur Ly est déterminée en fonction de l'écartement tangentiel entre deux pieds de montage adjacents 211. Dans cet exemple, la longueur Ly est sensiblement égale à l'écartement entre deux pieds de montage 210 d'aubes adjacentes 21 de manière à contraindre de manière simultanée les plateformes 211 des deux aubes adjacentes 21. Néanmoins, il va de soi qu'un organe d'amortissement 8 pourrait ne s'étendre que sous une unique plateforme 211 d'aube 21.

De manière préférée, l'épaisseur radiale est faible par rapport aux autres dimensions pour réduire la masse du dispositif d'amortissement 1 tout en ayant une épaisseur suffisante pour permettre une résistance mécanique suffisante et un effet ressort.

Grâce à l'invention, lors du fonctionnement de la turbomachine T, les mouvements relatifs existant entre les pieds de montage 210 des aubes 21 et leurs logements 200 sont fortement réduits. De surcroît, chaque organe d'amortissement 8 n'est pas susceptible de se déplacer lors du fonctionnement de la turbomachine T étant donné qu'il est solidaire de l'anneau de support 7 qui est lui-même bloqué par les disques de rotor 20, 20' et les plateformes 211 des aubes 21. Un organe d'amortissement 8 n'est donc pas susceptible d'augmenter l'usure des pieds de montage 210 ou celle du disque de rotor aval 20'.

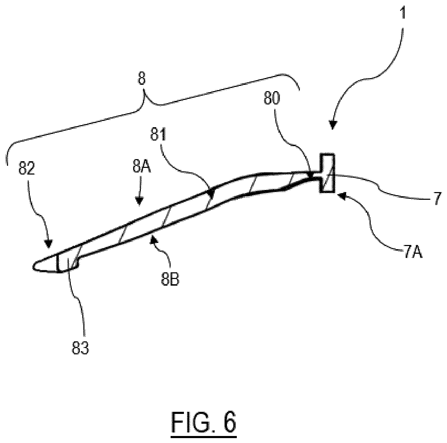

Selon l'invention, l'épaisseur de l'organe d'amortissement 8 n'est pas constante sur sa longueur de manière à permettre un amortissement optimal. Comme illustré aux figures 5 et 6, chaque organe d'amortissement 8 comprend une portion proximale 80, ayant une épaisseur proximale E80, reliée à l'anneau de support 7, une portion distale 82, ayant une épaisseur distale E82, montée libre et une portion centrale 81, ayant une épaisseur centrale E81, formée entre la portion proximale 80 et la portion distale 82. Selon un aspect de l'invention, l'épaisseur proximale E80 est plus faible que l'épaisseur centrale E81, de préférence d'au moins 50%, de manière à permettre d'offrir une flexibilité à la portion centrale 81 qui peut ainsi pivoter du fait de sa flexibilité à la manière d'une lame ressort. Autrement dit, la portion proximale 80 forme une charnière qui permet d'améliorer l'amortissement. L'épaisseur E80 de la portion proximale 80 demeure suffisamment importante pour assurer la tenue mécanique.

Dans cet exemple, l'épaisseur distale E82 est plus grande que l'épaisseur centrale E81, de préférence, d'au moins 100%. De manière avantageuse, la portion distale 82 possède une surépaisseur pour augmenter sa masse, ce qui augmente la force de plaquage au niveau de la portion distale 82 sous l'effet des forces centrifuge et de l'effet de levier du fait du montage en porte-à-faux. Grâce à cette caractéristique, la plateforme 211 de chaque aube 21 est plaquée de manière optimale même si la longueur d'un organe d'amortissement 8 est plus faible que la longueur d'une plateforme 210.

Dans cet exemple, toujours en référence à la figure 6, l'organe d'amortissement 8 comprend une face supérieure 8A plane et une face inférieure 8B comprenant une excroissance 83, ou bourrelet, correspondant à la surépaisseur. Ainsi, la surépaisseur n'affecte que la face inférieure 8B et aucunement la face supérieure 8A destinée à être en contact avec les plateformes 211 des aubes 21. De manière avantageuse, l'excroissance 83 peut être avantageusement usinée afin d'équilibrer la masse du disque de rotor 20 équipé du dispositif d'amortissement 1, c'est-à-dire, pour corriger des balourds liés à l'amortissement dynamique.

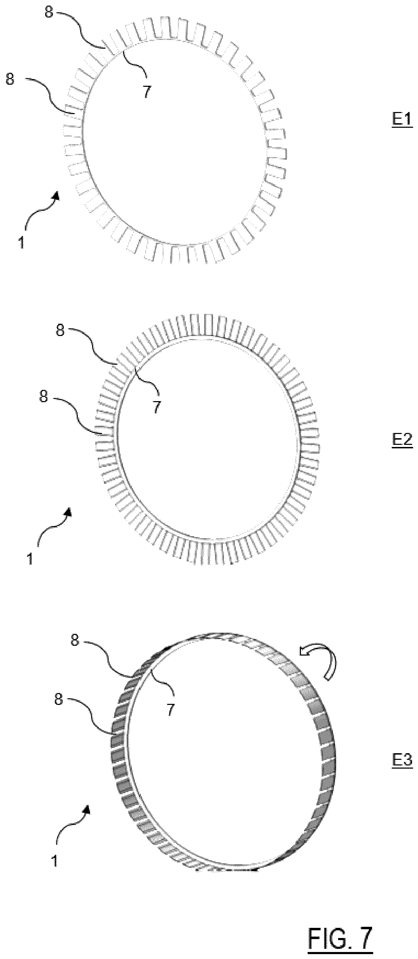

Un tel dispositif d'amortissement 1 peut être obtenu pour un coût réduit. En référence à la figure 7, un exemple de mise en oeuvre d'un procédé de fabrication comporte successivement une étape de découpage E1, une étape d'emboutissage E2 et une étape de pliage E3. Au cours de l'étape de découpage E1, les contours plans du dispositif d'amortissement 1 sont découpés, au moyen d'un organe de coupe, dans un panneau mince métallique de manière à former l'anneau de support 7 et les organes d'amortissement 8, les organes d'amortissement 8 s'étendant radialement par rapport à l'axe de l'anneau de support 7. Suite à l'étape de découpage E1, les organes d'amortissement 8 sont emboutis de sorte à leur conférer un relief et des épaisseurs calibrées. Puis, suite à l'étape d'emboutissage E2, chaque organe d'amortissement 8 embouti est plié afin d'être orienté dans la direction axiale vers l'amont au cours de l'étape de pliage E3. Dans cet exemple, les organes d'amortissement 8 sont pliés d'environ 90°.

Le dispositif d'amortissement 1 est monté de manière radialement extérieure au disque de rotor 20 dont les aubes 21 doivent être amorties. En référence à la figure 5, la face aval 7A de l'anneau de support 7 est plaquée contre une face amont du disque de rotor 20' positionné en aval au disque de rotor 20 dont les aubes 21 doivent être amorties. Les organes d'amortissement 8 sont positionnés de manière circonférentielle entre les logements 200 de manière à ne pas gêner le montage des aubes 21.

Suite au positionnement du dispositif d'amortissement 1, les organes d'amortissement 8 s'étendent en saillie vers l'amont et permettent de participer au guidage des plateformes 211 lors de l'insertion des aubes 21 dans les logements 200 du disque de rotor 20. Lors du montage des aubes 21, la portion distale 82 des organes d'amortissement 8 est contrainte radialement vers l'intérieur en tirant avantage de la portion proximale 80 qui est flexible. Ainsi, du fait de cette précontrainte, chaque organe d'amortissement 8 agit comme une lame ressort pour plaquer les plateformes 211 des aubes 21 vers l'extérieur.

Suite au positionnement des aubes 21, chaque organe d'amortissement 8 s'étend tangentiellement entre deux pieds de montage adjacents 210 et radialement entre la périphérie extérieure du disque de rotor 20 et les plateformes 211 des aubes adjacentes 21.

Suite au positionnement des aubes 21, l'anneau de support 7 est bloqué d'une part longitudinalement vers l'aval par le disque de rotor aval 20' et, d'autre part, radialement entre les plateformes 211 et la surface extérieure du disque de rotor 20.

De manière préférée, un dispositif d'amortissement 1 selon l'invention peut être utilisé dans une turbomachine existante en lieu et place des amortisseurs existants. Selon un aspect préféré, le pied de montage 210 des aubes 21 peut être usiné, par exemple par formation d'un décrochement, afin de permettre un appui de l'aube 21 sur l'anneau de support 7.

Lors du fonctionnement de la turbomachine T, le disque de rotor 20 du compresseur 3 de la turbomachine T est mis en rotation selon l'axe longitudinal X. Par effet centrifuge, chaque pied de montage 210 d'aube 21 est déplacé radialement vers la partie extérieure de son logement 200. De manière analogue, chaque organe d'amortissement 8 est entraîné en rotation par le disque de rotor 20. Par effet centrifuge, chaque organe d'amortissement 8, qui s'étend sous deux plateformes 211, exerce un effort radial vers l'extérieur, ce qui permet de réaliser un plaquage vers l'extérieur qui est optimal.

Lors d'une baisse du régime de la turbomachine T, la vitesse de rotation du rotor 2 diminue, entraînant une diminution de l'effet centrifuge développé. Un pied de montage 210 d'une aube 21 est alors susceptible de se déplacer dans son logement 200. Grâce au dispositif d'amortissement 1 selon l'invention, les plateformes des aubes 21 sont maintenues plaquées radialement vers l'extérieur même lorsque les efforts centrifuges sont diminués. Grâce à l'effet ressort des organes d'amortissement 8, toute variation radiale est compensée de manière dynamique.

La surépaisseur de la portion distale 82 de chaque organe d'amortissement 8 permet de réaliser un plaquage efficace sous l'effet des forces centrifuges, en particulier, à mi-longueur des plateformes 211.

Grâce à l'invention, les phénomènes d'usure au niveau des aubes 21 et du disque de rotor 20 sont fortement réduits. Par ailleurs, de manière avantageuse, un organe d'amortissement 8 n'est pas susceptible d'augmenter l'usure du disque de rotor 20' situé en aval au disque de rotor 2 car il est solidaire de l'anneau de support 7 lui-même positionné de manière stable contre le disque de rotor aval 20'. La durée de vie du disque de rotor aval 20', dont le coût est élevé, est ainsi préservée.

## Revendications

1. Rotor (2) de compresseur pour turbomachine d'aéronef (T) s'étendant longitudinalement selon un axe X, ledit rotor (2) comprenant un disque de rotor (20) s'étendant transversalement par rapport à l'axe longitudinal X et une pluralité d'aubes (21), ledit disque de rotor (20) comprenant une pluralité de logements (200) formés à la périphérie extérieure du disque de rotor (20), chaque aube (21) s'étendant radialement par rapport à l'axe longitudinal X et comprenant un pied de montage (210), radialement intérieur, configuré pour être monté dans un desdits logements (200), une plateforme (211) et une pale de déviation d'air (212) radialement extérieure, le rotor (2) comprenant un dispositif d'amortissement (1) qui comprend :
• un anneau de support (7) qui s'étend transversalement par rapport à l'axe longitudinal X et qui est positionné à la périphérie extérieure du disque de rotor (20) et
• une pluralité d'organes d'amortissement (8), solidaires de l'anneau de support (7) et s'étendant en saillie vers l'amont depuis l'anneau de support (7), chaque organe d'amortissement (8) s'étendant sous au moins une plateforme (211) d'une aube (21) de manière à exercer un effort radial vers l'extérieur de manière à amortir le déplacement radial de ladite aube (21) lors du fonctionnement de la turbomachine (T).

2. Rotor selon la revendication 1 dans lequel le dispositif d'amortissement (1) est constitué d'un anneau de support (7) et d'une pluralité d'organes d'amortissement (8).

3. Rotor selon l'une des revendications 1 et 2, dans lequel chaque organe d'amortissement (8) est monté de manière précontrainte sous au moins une plateforme (211) d'une aube (21) de manière à exercer un effort radial vers l'extérieur de manière à amortir le déplacement radial de ladite aube (21) lors du fonctionnement de la turbomachine (T).

4. Rotor selon l'une des revendications 1 à 3, dans lequel les organes d'amortissement (8) sont répartis de manière uniforme à la circonférence de l'anneau de support (7).

5. Rotor selon l'une des revendications 1 à 4, dans lequel au moins un organe d'amortissement (8) comprend une portion proximale (80) reliée à l'anneau de support (7), une portion distale (82) montée libre et une portion centrale (81) formée entre la portion proximale (80) et la portion distale (82).

6. Rotor selon la revendication 5, dans lequel, la portion proximale (80) possède une épaisseur inférieure à l'épaisseur de la portion centrale (81).

7. Rotor selon l'une des revendications 5 et 6, dans lequel, la portion distale (82) possède une épaisseur supérieure à l'épaisseur de la portion centrale (81).

8. Rotor selon l'une des revendications 1 à 7, dans lequel au moins un organe d'amortissement (8) comprend une face extérieure plane (8A), destinée à venir en contact avec une plateforme (211), et une face intérieure (8B), opposée à la face extérieure (8A), comprenant une excroissance, en particulier, à son extrémité distale.

9. Rotor (2) selon l'une des revendications 1 à 8 dans lequel chaque organe d'amortissement (8) s'étend sous au moins les plateformes (211) de deux aubes (21).

10. Rotor (2) selon l'une des revendications 1 à 9, comprenant un disque de rotor aval (20'), positionné en aval du disque de rotor (20) dans lequel sont montées les aubes (21), l'anneau de support (7) est positionné contre le disque de rotor aval (20').

11. Rotor (2) selon l'une des revendications 1 à 10 dans lequel chaque organe d'amortissement (8) s'étend en porte à faux vers l'amont.

12. Rotor (2) selon l'une des revendications 1 à 11 dans lequel chaque organe d'amortissement (8) se présente sous la forme d'une lame ressort configurée pour exercer un effort radial vers l'extérieur.

## Patentansprüche

1. Rotor (2) eines Kompressors für eine Turbomaschine eines Flugzeugs (T), der sich gemäß einer Achse X längs erstreckt, wobei der Rotor (2) eine Rotorscheibe (20), die sich im Verhältnis zur Längsachse X quer erstreckt, und eine Vielzahl von Schaufeln (21) umfasst, wobei die Rotorscheibe (20) eine Vielzahl von Aufnahmen (200) umfasst, die an der äußeren Peripherie der Rotorscheibe (20) ausgebildet sind, wobei sich jede Schaufel (21) im Verhältnis zur Längsachse X radial erstreckt und einen radial inneren Montagefuß (210), der dazu ausgelegt ist, in einer der Aufnahmen (200) angebracht zu sein, eine Plattform (211) und ein radial äußeres Luftablenkungsblatt (212) umfasst, wobei der Rotor (2) eine Dämpfungsvorrichtung (1) umfasst, die umfasst:
• einen Stützring (7), der sich im Verhältnis zur Längsachse X quer erstreckt und der an der äußeren Peripherie der Rotorscheibe (20) positioniert ist, und
• eine Vielzahl von Dämpfungsorganen (8), die mit dem Stützring (7) fest verbunden sind und sich ab dem Stützring (7) nach stromaufwärts hervorstehend erstrecken, wobei sich jedes Dämpfungsorgan (8) unter mindestens einer Plattform (211) einer Schaufel (21) derart erstreckt, dass eine radiale Kraft derart nach außen ausgeübt wird, dass die radiale Bewegung der Schaufel (21) im Betrieb der Turbomaschine (T) gedämpft wird.

2. Rotor nach Anspruch 1, wobei die Dämpfungsvorrichtung (1) aus einem Stützring (7) und einer Vielzahl von Dämpfungsorganen (8) besteht.

3. Rotor nach einem der Ansprüche 1 und 2, wobei jedes Dämpfungsorgan (8) vorgespannt unter mindestens einer Plattform (211) einer Schaufel (21) derart angebracht ist, dass eine radiale Kraft derart nach außen ausgeübt wird, dass die radiale Bewegung der Schaufel (21) im Betrieb der Turbomaschine (T) gedämpft wird.

4. Rotor nach einem der Ansprüche 1 bis 3, wobei die Dämpfungsorgane (8) auf dem Umfang des Stützrings (7) gleichmäßig verteilt sind.

5. Rotor nach einem der Ansprüche 1 bis 4, wobei mindestens ein Dämpfungsorgan (8) einen proximalen Abschnitt (80) umfasst, der mit dem Stützring (7) verbunden ist, einen distalen Abschnitt (82), der frei angebracht ist und einen zentralen Abschnitt (81), der zwischen dem proximalen Abschnitt (80) und dem distalen Abschnitt (82) ausgebildet ist.

6. Rotor nach Anspruch 5, wobei der proximale Abschnitt (80) eine Dicke besitzt, die kleiner als die Dicke des zentralen Abschnitts (81) ist.

7. Rotor nach einem der Ansprüche 5 und 6, wobei der distale Abschnitt (82) eine Dicke besitzt, die größer als die Dicke des zentralen Abschnitts (81) ist.

8. Rotor nach einem der Ansprüche 1 bis 7, wobei mindestens ein Dämpfungsorgan (8) eine ebene Außenfläche (8A) umfasst, die bestimmt ist, mit einer Plattform (211) in Kontakt zu kommen, und eine der Außenfläche (8A) gegenüberliegende Innenfläche (8B), die einen Vorsprung vor allem an ihrem distalen Ende umfasst.

9. Rotor (2) nach einem der Ansprüche 1 bis 8, wobei sich jedes Dämpfungsorgan (8) unter mindestens den Plattformen (211) von zwei Schaufeln (21) erstreckt.

10. Rotor (2) nach einem der Ansprüche 1 bis 9, umfassend eine stromabwärtige Rotorscheibe (20'), die stromabwärtig zur Rotorscheibe (20) positioniert ist, in der die Schaufeln (21) angebracht sind, wobei der Stützring (7) an der stromabwärtigen Rotorscheibe (20') positioniert ist.

11. Rotor (2) nach einem der Ansprüche 1 bis 10, wobei sich jedes Dämpfungsorgan (8) freitragend nach stromaufwärts erstreckt.

12. Rotor (2) nach einem der Ansprüche 1 bis 11, wobei jedes Dämpfungsorgan (8) in Form eines Federblatts vorliegt, das dazu ausgelegt ist, eine radiale Kraft nach außen auszuüben.

## Claims

1. Compressor rotor (2) for aircraft turbomachine (T) extending longitudinally along an axis X, said rotor (2) comprising a rotor disc (20) extending transversally with respect to the longitudinal axis X and a plurality of blades (21), said rotor disc (20) comprising a plurality of housings (200) formed on the outer periphery of the rotor disc (20), each blade (21) extending radially with respect to the longitudinal axis X and comprising a mounting root (210), radially interior, configured to be mounted in one of said housings (200), a platform (211) and a radially exterior air deflector vane (212), the rotor (2) comprising a damping device (1) which comprises:
• a support ring (7) which extends transversally with respect to the longitudinal axis X and which is positioned on the outer periphery of the rotor disc (20) and
• a plurality of damping members (8), integral with the support ring (7) and extending projecting upstream from the support ring (7), each damping member (8) extending under at least one platform (211) of a blade (21) so as to exert a radial force outwards so as to damp the radial displacement of said blade (21) when the turbomachine (T) is in operation.

2. Rotor according to claim 1, wherein the damping device (1) is constituted of a support ring (7) and a plurality of damping members (8).

3. Rotor according to one of claims 1 and 2, wherein each damping member (8) is mounted in a prestressed manner under at least one platform (211) of a blade (21) so as to exert a radial force outwards so as to damp the radial displacement of said blade (21) when the turbomachine (T) is in operation.

4. Rotor according to one of claims 1 to 3, wherein the damping members (8) are spread out uniformly on the circumference of the support ring (7).

5. Rotor according to one of claims 1 to 4, wherein at least one damping member (8) comprises a proximal portion (80) connected to the support ring (7), a freely mounted distal portion (82) and a central portion (81) formed between the proximal portion (80) and the distal portion (82).

6. Rotor according to claim 5, wherein the proximal portion (80) has a thickness less than the thickness of the central portion (81).

7. Rotor according to one of claims 5 and 6, wherein the distal portion (82) has a thickness greater than the thickness of the central portion (81).

8. Rotor according to one of claims 1 to 7, wherein at least one damping member (8) comprises a flat outer face (8A), intended to come into contact with a platform (211), and an inner face (8B), opposite to the outer face (8A), comprising a protuberance, in particular, at its distal end.

9. Rotor (2) according to one of claims 1 to 8, wherein each damping member (8) extends under at least the platforms (211) of two blades (21).

10. Rotor (2) according to one of claims 1 to 9, comprising a downstream rotor disc (20'), positioned downstream of the rotor disc (20) in which the blades (21) are mounted, the support ring (7) is positioned against the downstream rotor disc (20').

11. Rotor (2) according to one of claims 1 to 10, wherein each damping member (8) extends cantilevered upstream.

12. Rotor (2) according to one of claims 1 to 11, wherein each damping member (8) is in the form of a spring blade configured to exert a radial force outwards.
